# EUROPEAN PATENT APPLICATION

(11) **EP 4 650 103 A1**
(43) Date of publication of application: **19.11.2025**
(21) Application number: 25174940.4
(22) Date of filing: 08.05.2025
(51) Int. Cl.: B24B 37/10, B24B 57/02

(54) **SURFACE PROCESSING METHOD**

(30) Priority: 14.05.2024 JP 2024078771
(71) Applicant: DENSO CORPORATION, Kariya-city, Aichi-pref., 448-8661 (JP)
(72) Inventor: AOKI, Kazufumi, Kariya-city, 448-8661 (JP); YABUKI, Norihito, Kariya-city, 448-8661 (JP); SOLTANI HOSSINI, Bahman, Kariya-city, 448-8661 (JP)
(74) Representative: Kuhnen & Wacker Patent- und Rechtsanwaltsbüro PartG mbB

(57) **Abstract**

A surface processing method according to the present disclosure includes: supplying slurry (S) containing at least abrasive grains between a processing surface (W1) of a workpiece (W) and a processing pad (3); planarizing the processing surface of the workpiece through chemical and mechanical actions by moving the workpiece and the processing pad relative to each other with the slurry interposed between the processing surface of the workpiece and the processing pad; and cleaning the processing pad with a cleaning solution (L). In this method, during the planarization process, the slurry circulates through a circulation flow channel (R) for the slurry, which includes a slurry supply flow channel (63) that supplies the slurry to the processing pad and a slurry recovery flow channel (652) that recovers the slurry after use. When the processing pad is cleaned with the cleaning solution, the cleaning solution is discharged through a waste liquid flow channel (653), which is separate from the circulation flow channel, allowing liquid waste to flow through the waste liquid flow channel.

## Description

### BACKGROUND OF THE INVENTION

### 1. Technical Field

The present disclosure relates to a surface processing method for planarizing a processing surface of a workpiece through chemical and mechanical actions.

### 2. Related Art

JP 2016-175138 A (Japanese Unexamined Patent Application Publication No. 2016-175138) discloses a method for recovering abrasive from slurry that contains used abrasive in a chemical mechanical polishing (CMP) process, where slurry with abrasive is supplied between a polishing member, such as a polishing pad, and a polishing target and polishing is performed.

Specifically, the recovery method described in JP 2016-175138 A is a method for recovering abrasive from slurry that has been used to polish a polishing target containing silicon as a primary component. In this recovery method, the abrasive is recovered from the slurry by removing polishing target components through at least the following processes 1 to 3 under conditions where no pH adjuster is applied.
Process 1: adding a solvent to slurry as abrasive;
Process 2: dissolving polishing target particles (i.e., abraded matters) among polishing target components contained in the slurry; and
Process 3: collecting abrasive by filtering the slurry.

### SUMMARY OF THE INVENTION

As described in JP 2016-175138 A, the conventional method of recovering slurry and reusing it results in lower costs than disposing of the used slurry without recovery and reuse. However, the conventional method requires complex processing, such as adding solvents and chemicals to dissolve or separate the polishing target particles. Thus, there is potential for cost improvement in the conventional method.

This disclosure was made in light of the above-mentioned circumstances and other factors. In other words, the present disclosure provides a technology to enhance cost-effectiveness of recovering and reusing used slurry.

According to an aspect of the present disclosure, a surface processing method includes:
supplying slurry (S) containing at least abrasive grains between a processing surface (W1) of a workpiece (W) and a processing pad (3);
planarizing the processing surface of the workpiece through chemical and mechanical actions by moving the workpiece and the processing pad relative to each other with the slurry interposed between the processing surface of the workpiece and the processing pad; and
cleaning the processing pad with a cleaning solution (L).

The method further includes the following procedures, treatments, or processes.

During the planarization process, the slurry circulates through a circulation flow channel (R) for the slurry, which includes a slurry supply flow channel (63) that supplies the slurry to the processing pad and a slurry recovery flow channel (652) that recovers the slurry after use.

When the processing pad is cleaned with the cleaning solution, the cleaning solution is discharged through a waste liquid flow channel (653), which is separate from the circulation flow channel, allowing liquid waste to flow through the waste liquid flow channel.

Each element may be marked with the bracketed reference signs in the various paragraphs in this description. In this case, the reference signs indicate one example of the correspondence between the same element and the specific configuration described in the embodiment below. Therefore, this disclosure is not limited by the reference signs.

### BRIEF DESCRIPTION OF THE DRAWINGS

In the accompanying drawings:
FIG. 1 shows a schematic diagram of a surface processing apparatus for performing a surface processing method according to an embodiment of the present disclosure;
FIG. 2 is a flowchart showing procedures, treatments, or processes of a surface processing method according to the present disclosure;
FIG. 3 is a flowchart showing a slurry circulation process according to the present disclosure;
FIG. 4 is a flowchart showing a cleaning process according to the present disclosure; and
FIG. 5 is a graph illustrating the results of evaluating fluctuations in processing rates for a surface processing method according to the present disclosure.

### DETAILED DESCRIPTION OF THE PREFERRED EMBODIMENTS

### (Embodiment)

The following are descriptions of embodiments of the present disclosure, with reference to the drawings as appropriate. The following embodiments and variations thereof, as well as the related drawings, are schematic or simplified to briefly explain contents of the present disclosure. Therefore, the contents of the present disclosure are not limited by these statements. The descriptions in the drawings may not always match a specific apparatus configuration that is actually manufactured and sold. In other words, unless the applicant explicitly limits it during the present application process, the contents of the present disclosure should not be interpreted as limited by the descriptions in the drawings or those corresponding to the configurations of devices, functions, operations, and similar aspects described below.

### (Surface Processing Apparatus)

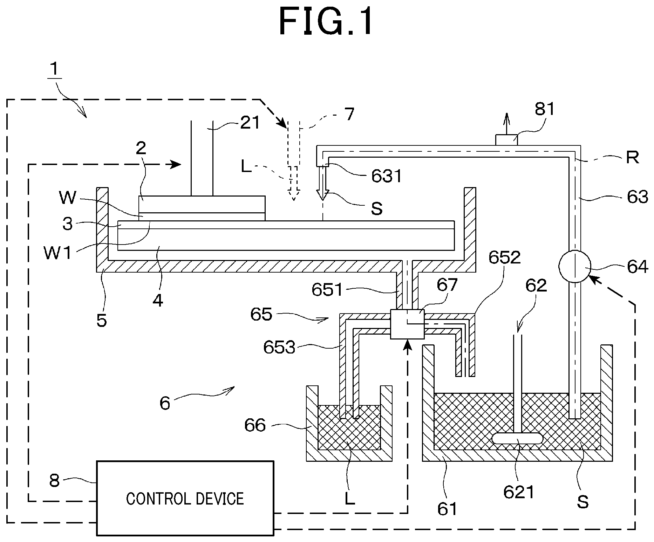

Referring to FIG. 1, a surface processing apparatus 1 is configured to enable the planarization of a processing surface W1 of a workpiece W through chemical and mechanical actions. The term "planarization" refers to processes such as grinding or polishing. CMP, ECMP, and ECMG are known as planarization processing methods of the above type. ECMP stands for an electro-chemical mechanical polishing; ECMG stands for an electro-chemical mechanical grinding. Keep in mind that CMP can be understood as an umbrella concept that includes ECMP. The broadly interpreted CMP includes ECMP unless explicitly specified that it is the narrowly interpreted CMP that does not include ECMP.

In the present embodiment, the surface processing apparatus 1 has a configuration as a CMP or ECMP device, polishing the workpiece W, which is a single-crystal SiC wafer. The workpiece W is, for example, a silicon-based material, typically a semiconductor material such as a silicon carbide semiconductor. Specifically, the surface processing apparatus 1 composes a workpiece support device 2, a processing pad 3, a pad support device 4, a casing 5, a slurry circulation supply mechanism 6, a cleaning solution supply device 7, and a control device 8. These elements composing the surface processing apparatus 1 are sequentially explained in the following descriptions.

The workpiece support device 2 is provided opposite the processing pad 3. The workpiece support device 2 is configured to rotate around a rotation axis 21 while pressing the workpiece W toward the processing pad 3, with the workpiece W held by a surface facing the processing pad 3 (i.e., a lower surface of the workpiece support device 2 in FIG. 1). The processing pad 3 is also called the "polishing pad." The processing pad 3 may be a well-known pad for CMP or ECMP, such as non-woven fabric, polyurethane, suede, or the like. The processing pad 3 is supported by the pad support device 4. The workpiece support device 2 and/or pad support device 4 are equipped with an adjustment mechanism (not shown in the figure) for adjusting processing conditions. The processing conditions include, for example, a temperature, pressing force, a rotation rate, and the like.

The casing 5 is provided to cover at least a processing area where the workpiece W and the processing pad 3 face each other. The casing 5 is provided to prevent slurry S supplied to the processing pad 3 or the processing area from scattering outside the surface processing apparatus 1. The casing 5 is configured to serve as a receptacle or recovery container that receives slurry S used in the planarization process in the processing area, preventing the used slurry S from leaking outside the surface processing apparatus 1. Thus, the surface processing apparatus 1 is configured so that slurry S is interposed between the processing surface W1 of the workpiece W and the processing pad 3, and the workpiece W and the processing pad 3 move relative to each other with the interposed slurry S. In this way, the surface processing apparatus 1 is configured to perform the planarization process of processing surface W1 through chemical and mechanical actions.

The slurry circulation supply mechanism 6 is configured to supply slurry S to the processing pad 3 or the processing area, recover slurry S after use (hereinafter referred to as the used slurry S for convenience) and reuse the recovered slurry S in the planarization process. Specifically, the slurry circulation supply mechanism 6 composes a slurry tank 61, a stirrer 62, a slurry supply flow channel 63, a supply pump 64, a slurry discharge flow channel 65, a waste liquid container 66, and a three-way valve 67.

The slurry tank 61 is provided to store a specific amount of slurry S that will be supplied to the processing pad 3 or the processing area. The slurry S is composed of at least abrasive grains, along with a solvent and various agents that facilitate chemical actions, such as oxidants and electrolytes. These chemical actions include electrochemical processes. The stirrer 62 is equipped with a rotating component, referred to as a stirring bar 621, which stirs slurry S within the slurry tank 61. This stirring helps prevent the abrasive grains from settling, ensuring that they remain evenly dispersed throughout the slurry S.

The slurry supply flow channel 63 is configured to supply slurry S from the slurry tank 61 to the processing pad 3. Specifically, a base end (first end) of the slurry supply flow channel 63 is arranged in the slurry tank 61. A slurry nozzle 631 is provided at a tip end (second end) of the slurry supply flow channel 63. The base end indicates a part of the flow channel close to an inlet port (e.g., intake port) of fluid. On the other hand, the tip end indicates a part of the flow channel close to an outlet port (e.g., discharge port) of fluid. The slurry nozzle 631 is designed to jet slurry S toward the processing pad 3. The supply pump 64 pressurizes slurry S, thereby discharging the slurry S toward the slurry nozzle 631. The supply pump 64 is disposed of the slurry supply flow channel 63 and interposed between the base and the tip end thereof.

The casing 5 receives the used slurry S and a cleaning solution L that is used to clean the processing pad 3. The slurry discharge flow channel 65 is provided to discharge the cleaning solution L from the casing 5. For example, pure water may be used as the cleaning solution L. Specifically, the slurry discharge flow channel 65 has a primary discharge flow channel 651, a slurry recovery flow channel 652, and a waste liquid flow channel 653. The slurry discharge flow channel 65 is configured to branch from the primary discharge flow channel 651 into the slurry recovery flow channel 652 and the waste liquid flow channel 653.

The base end (first end) of the primary discharge flow channel 651 is connected to a drain hole formed as a through hole in a bottom of the casing 5. The tip end (second end) of the primary discharge flow channel 651 is connected to the three-way valve 67. The three-way valve 67 switches an outflow of fluid from the primary discharge flow channel 651 to either the slurry recovery flow channel 652 or the waste fluid flow channel 653. Therefore, the three-way valve 67 is disposed between the primary discharge flow channel 651 and the slurry recovery flow channel 652 or the waste fluid flow channel 653, and is interposed in the slurry discharge flow channel 65. The slurry recovery flow channel 652 is provided to recover (i.e., return to the slurry tank 61) the used slurry S that flows from the primary discharge flow channel 651. The waste liquid flow path 653 is provided to flow the cleaning solution L from the primary discharge flow channel 651 to the waste liquid container 66. The waste liquid container 66 is configured to store the cleaning solution L. The three-way valve 67, controlled by the control device 8, connects and communicates with the primary discharge flow channel 651 and the slurry recovery flow channel 652 when performing the planarization process of the processing surface W1. On the other hand, the three-way valve 67 connects and communicates with the primary discharge flow channel 651 and the waste fluid flow channel 653 when performing the cleaning process of the processing pad 3.

Thus, the slurry circulation supply mechanism 6 is configured to circulate slurry S in a circulation flow channel R, which includes the slurry supply flow channel 63 and the slurry recovery flow channel 652, when performing the planarization process of the processing surface W1. The slurry circulation supply mechanism 6 is configured to discharge the cleaning solution L into the waste liquid container 66 through the waste liquid flow channel 653, which differs from the slurry recovery flow channel 652 (i.e., it is separate from the slurry recovery flow channel 652) when performing the cleaning process of the processing pad 3. The cleaning solution supply device 7 is provided to supply the cleaning solution L to the processing pad 3 for cleaning the processing pad 3.

The control device 8 is a microcomputer with one or more CPUs and one or more storage mediums (hereinafter referred to as memory for convenience). Note that the memory includes a non-transitory tangible storage medium. The control device 8 is configured to control each operation of the workpiece support device 2, pad support device 4, slurry circulation supply mechanism 6, and cleaning solution supply device 7. For example, the CPU executes a program stored in the memory, thereby controlling each operation of these devices by sending respective control signals to the workpiece support device 2, pad support device 4, slurry circulation supply mechanism 6, and cleaning solution supply device 7. Specifically, the control device 8 sets processing conditions and controls the slurry circulation supply mechanism 6 based on measurement results of properties of slurry S by a measurement device 81 (e.g., a sensor) provided in the slurry supply flow channel 63. The measurement device 81 measures the properties of slurry S flowing through the slurry supply flow channel 63. Note that the measurement device 81 may be configured to include an introducer to introduce slurry S to this measurement device. The properties of slurry S to be measured include, for example, at least one of the following: pH, conductivity, zeta potential, concentration of abrasive grains, and grain size distribution of abrasive grains. The control device 8 also controls the operation of the supply pump 64 and the three-way valve 67.

### (Surface Processing Method)

There is a disposal method in which slurry S used for processing is disposed of each time without being recovered or reused. This disposal method has issues related to environmental problems and costs due to waste generation. Therefore, there is a reuse method in which slurry S used for processing is recovered or reused. However, in this reuse method, additional treatment is necessary, such as adding solvents or chemicals to the used slurry S to dissolve or separate polishing target particles (i.e., abraded matters). Consequently, this reuse method results in higher costs. From this perspective, in the reuse method, it is preferred to use the used slurry S in circulation as it is. However, scratching caused by foreign matters, such as agglomerates of abrasive grains and abraded matters contained in the recovered slurry S, may be a risk.

Therefore, the surface processing method of the present disclosure planarizes the processing surface W1 using the surface processing apparatus 1 with the configuration mentioned above, while using the used slurry S in circulation as it is. Specifically, this surface processing method includes the following procedures, treatments, or processes.

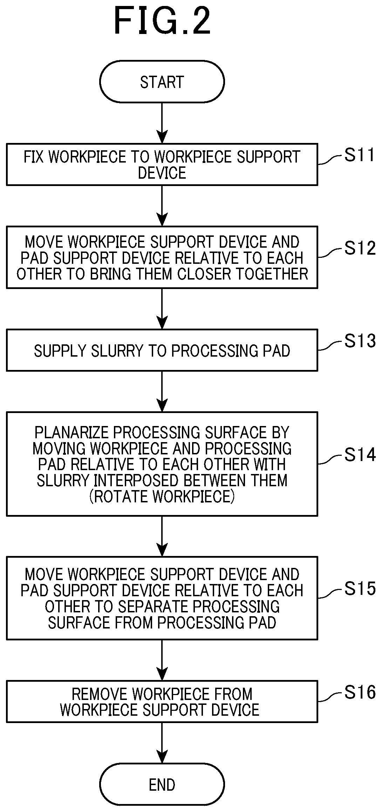

FIG. 2 is a flowchart showing procedures, treatments, or processes of the surface processing method according to the present embodiment. Of the steps shown in FIG. 2, at least the steps shown in S12 through S15 are realized by the control device 8 controlling each operation of the workpiece support device 2, pad support device 4, and slurry circulation supply mechanism 6. As shown in FIG. 2, the workpiece W is fixed to the workpiece support device 2 in the surface processing device 1 (S11). In the surface processing apparatus 1, the workpiece support device 2 and the pad support device 4 are moved relative to each other to bring them closer together, making contact between the processing surface W1 and the processing pad 3 (S12). Typically, the surface processing apparatus 1 moves the workpiece support device 2 toward the processing pad 3 along an axial direction of the rotary axis 21, for example. The surface processing apparatus 1 supplies slurry S to the processing pad 3 through the slurry supply flow channel 63 to interpose slurry S containing at least abrasive grains between the processing surface W1 and the processing pad 3 (S13). In the surface processing apparatus 1, the workpiece W and the processing pad 3 are moved relative to each other with the slurry interposed between the processing surface W1 and the processing pad 3. In other words, in the surface processing apparatus 1, for example, the workpiece W is rotated around the rotation axis 21. In this way, the surface processing apparatus 1 planarizes the processing surface W1 through chemical and mechanical actions (S14). In the planarization process (S14), slurry S circulates in the circulation flow channel R.

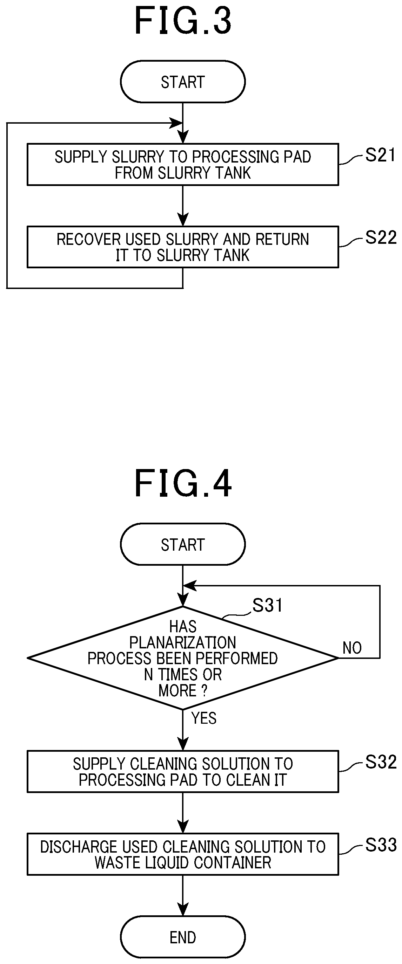

FIG. 3 is a flowchart showing the slurry circulation process according to the present embodiment. The control device 8, which controls the operations of the slurry circulation supply mechanism 6, realizes each of the steps shown in FIG. 3. As shown in FIG. 3, the slurry circulation supply mechanism 6 supplies slurry S from the slurry tank 61 to the processing pad 3 through the slurry supply flow channel 63 (S21). The used slurry S is received by the casing 5. In the slurry circulation supply mechanism 6, the three-way valve 67 switches an outflow of the used slurry S from the primary discharge flow channel 651 to the slurry recovery flow channel 652. As a result, the slurry circulation supply mechanism 6 recovers the used slurry S and returns it to the slurry tank 61 through the primary discharge flow channel 651 and slurry recovery flow channel 652 (S22).

Return to the explanation in FIG. 2. After the planarization process is completed, the workpiece support device 2 and the pad support device 4 are moved relative to each other to separate the processing surface W1 from the processing pad 3 (S15). Thereafter, the workpiece W is removed from the workpiece support device 2 in the surface processing apparatus 1 (S16).

FIG. 4 is a flowchart showing the cleaning process according to the present embodiment. The control device 8, which controls the operations of the slurry circulation supply mechanism 6 and the cleaning solution supply device 7, realizes each of the steps shown in FIG. 4. As shown in FIG. 4, the control device 8 determines whether the planarization process has been performed N times (a predetermined number of times) (S31). When the control device 8 determines that the planarization process has been performed N times (S31: YES), it commands the cleaning solution supply device 7 to start the cleaning process. Thus, the cleaning process is performed every time the planarization process is performed the predetermined number of times (every N times). N is an integer greater than or equal to 1. N is one of 1 to 3, for example. The cleaning solution supply device 7 supplies the cleaning solution L to the processing pad 3 to clean it, with the workpiece support device 2 separated from the processing pad 3 (S32). The cleaning solution L after use (hereinafter referred to as the used cleaning solution L for convenience) is received by the casing 5. In the slurry circulation supply mechanism 6, the three-way valve 67 switches an outflow of the used cleaning solution L from the primary discharge flow channel 651 to the waste liquid flow channel 653. As a result, the slurry circulation supply mechanism 6 discharges the used cleaning solution L to the waste liquid container 66, which differs from the slurry tank 61, through the waste liquid flow channel 653, which differs from the slurry recovery flow channel 652 (S33). This cleaning process is not performed during a period when the planarization process is being performed. In other words, the cleaning process is performed during a period when slurry S is not being supplied. Therefore, slurry S and a cleaning solution L are not mixed in casing 5, the primary discharge channel 651, or the like. The used slurry S mixed with the cleaning solution L is not recovered in slurry tank 61 and is not reused thereafter. According to the present embodiment, in the surface processing apparatus 1, the used slurry S, which is not mixed with the cleaning solution L, is recovered in slurry tank 61 and supplied from the slurry tank 61 for reuse.

As described above, the surface processing method, according to the present embodiment, can circulate and reuse the used slurry S without any additional treatment (addition of solvents, chemicals, or the like) using the surface processing apparatus 1 having the configuration mentioned above. Properties and conditions for using slurry S are specified below to ensure optimal processing quality and rates (i.e., processing cost per unit time). For example, the slurry S in the present embodiment shall be made of manganese dioxide (MnO₂) abrasive grains dispersed in a potassium permanganate (KMnO₄) solution.

Concerning the processing rate, slurry S is preferably neutral slurry within a pH range of 7 to 9, where the concentration of an oxidizing agent is less likely to decrease. A flow rate of slurry S through the slurry supply flow channel 63 is preferable to be higher than a predetermined flow rate to prevent abrasive grains from settling. Specifically, the flow rate of the slurry S is preferably 0.15 m/s or more, preferably 0.2 m/s or more. Furthermore, the processing pad 3 may use a polishing pad that can withstand the planarization process for more than 10 hours. As the processing pad 3, for example, a soft polishing pad made of non-woven fabric impregnated with polyurethane resin, a hard polishing pad made of foamed polyurethane, a two-layer pad consisting of the soft polishing pad and the hard polishing pad bonded together, or the like, of which a highly durable (e.g., highly heat-resistant) polishing pad may be used. More specifically, as the processing pad 3, it is appropriate to use a polishing pad with heat resistance capable of withstanding temperatures up to 90°C.

Concerning the processing quality, it is preferable to use abrasive grains that are less likely to occur scratching. Specifically, the abrasive grains with Mohs hardness of 10 or less, preferably 4 or less, are preferred for use. A grain size of the abrasive grains in slurry S flowing through the slurry supply flow channel 63 is preferably 20 µm or less. The concentration of the abrasive grains in slurry S is preferably 15% by weight or less. Cleaning of a surface of the processing pad 3 is preferable to be performed each time after performing the planarization process (i.e., N = 1). A cleaning solution L is discharged through a different flow channel (waste liquid flow channel 653, which is separate from the slurry recovery flow channel 652) from the circulation flow channel R of slurry S to remove foreign matters such as abraded matters.

Furthermore, the surface processing apparatus 1, according to the present embodiment, measures properties such as fluctuations in the concentration and grain size distribution of abrasive grains in slurry S flowing through the slurry supply flow channel 63, using the measurement device 81. The control device 8 then controls stirring conditions of the slurry S, a flow rate, and processing conditions (e.g., temperature) for the planarization process, based on measurement results from the measurement device 81. In other words, the control device 8 performs a feedback control of the stirring conditions, flow rate, and processing conditions, based on the measurement results from the measurement device 81.

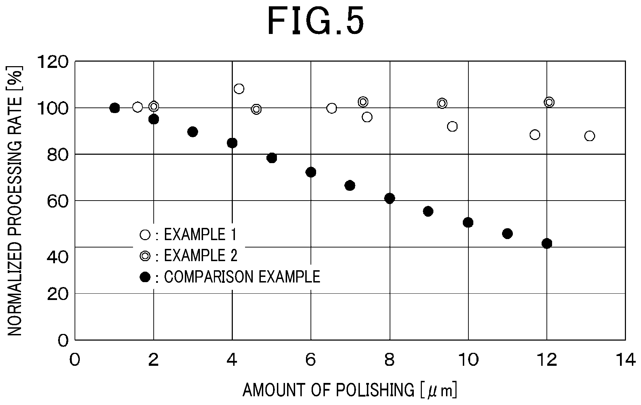

FIG. 5 shows the results of evaluating fluctuation in a processing rate in CMP for two examples and one comparison example. In FIG. 5, a horizontal axis represents an amount of polishing (integrated processing amount) [µm] since the start of use (initial) of unused slurry S. A vertical axis represents a processing rate [%], normalized by establishing an initial processing rate of slurry S at 100% for the unused slurry S. Comparative Example is an example of performing the surface processing method using a surface processing apparatus without the waste liquid flow channel 653 and waste liquid container 66 shown in FIG. 1. Therefore, Comparative Example is an example in which the used slurry S and cleaning solution L are collected in the slurry tank 61, and the used slurry S is reused. Examples 1 and 2 show cases where the surface processing method using surface processing apparatus 1 of the above embodiment is performed. A processing rate differs between Example 1 and Example 2. Specifically, a processing rate in Example 2 is higher than each processing rate in Comparative Example and Example 1. That is, Comparative Example and Example 1 have lower processing rate conditions than Example 2, and Example 2 has a higher processing rate condition than Comparative Example and Example 1. Initial processing rates are identical between Comparative Example and Example 1.

As shown in FIG. 5, the processing rate in Comparative Example significantly decreased as the integrated processing amount increased (processing time elapsed). In contrast, no significant decrease in the processing rate was observed in Examples 1 and 2, even as the integrated processing amount increased. In the Comparative Example, the decrease in the processing rate exceeded 15%. In contrast, the surface processing method, according to the present embodiment, effectively limited the decrease in the processing rate to within 15%. Additionally, the increase in scratching was limited to remain within 15%. Therefore, this surface processing method allows for the planarization processing for 10 hours or more without the need to add or replace slurry S, while still maintaining high processing quality and efficiency.

### (Modifications)

This disclosure is not limited to the above embodiments. Therefore, modifications can be made to the above embodiments as appropriate. Typical modifications are described below. In the following description of the modifications, differences from the above embodiments are mainly explained. In the above embodiments and modifications, parts that are identical or equivalent to each other are marked with same signs. Therefore, in the description of the following modifications concerning the components having the same signs as in the above embodiments, the description in the above embodiments may be aided as appropriate unless there is a technical contradiction or a particular additional explanation.

The present disclosure is not limited to the specific device configuration shown in the above embodiments. In other words, FIG. 1 and the above description using it are simplified exclusively to explain the surface processing method capable of performing using the surface processing apparatus 1 and the schematic configuration and functions of the surface processing apparatus 1 according to the present embodiment. Therefore, the surface processing apparatus 1 does not necessarily correspond to the specific equipment configuration that is actually manufactured and sold. the equipment configuration that is actually manufactured and sold may be modified as needed from the exemplary configuration shown in FIG. 1.

For example, the processing pad 3 and the pad support device 4 that supports it may be configured to allow rotatable driving. There are no specific limitations on the shape of casing 5, the slurry circulation supply mechanism 6, the flow channels, or similar components. Specifically, for example, the stirrer 62 is not limited to a configuration that uses a stirring bar 621 to rotate within the slurry tank 61. The primary discharge flow channel 651 and the slurry recovery flow channel 652 may be configured to extend in the same direction. The primary discharge flow channel 651 and the waste fluid flow channel 653 may be configured to extend in the same direction.

Slurry S may be used as the cleaning solution L. In this case, the surface processing apparatus 1 does not need the cleaning solution supply device 7. Additionally, a configuration is required to return the slurry S from the waste liquid container 66 to the slurry tank 61 after removing foreign matters, among other things. To achieve this, a stirring mechanism in the waste liquid container 66 and a mechanism to return a supernatant portion of the slurry S (slurry without foreign matters that has settled at the bottom of the container) stirred in the waste liquid container 66 to the slurry tank 61 may be provided.

This disclosure is not limited to the specific processing shown in the above embodiments. That is, for example, the technology of the present disclosure does not completely preclude any additional treatment for the used slurry S. The technology in the present disclosure allows for the additional treatment to maintain processing quality and processing rates. Specifically, for example, the replenishment or replacement of the unused slurry S, the addition of dispersants, or similar treatments may be performed at each predetermined number of processings or over processing time as appropriate.

Each element of the above embodiments is not necessarily essential as the element, except when expressly stated as particularly essential or when they are critical in principle, etc. When numerical values of the number, amount, range, etc., of the elements are described, the present disclosure is not limited to those values, except when expressly stated as particularly essential or when limited to a particular value in principle. Similarly, when the shape, orientation, positional relationship, etc., of the elements, etc., are described, the present disclosure is not limited to such shape, orientation, positional relationship, etc., except when expressly stated as particularly essential or when limited to a particular shape, orientation, positional relationship, etc., in principle.

The modifications are also not limited to the above description. For example, multiple embodiments, other than those described above, can be combined with each other as long as there is no technical contradiction therebetween. Similarly, multiple modifications can be combined with each other as long as there is no technical contradiction therebetween.

### (Aspect of Present Disclosure)

As is apparent from the description of the embodiments and modifications described above, at least the following aspects are disclosed herein.

### [Aspect 1-1]

A surface processing method including:
supplying slurry (S) containing at least abrasive grains between a processing surface (W1) of a workpiece (W) and a processing pad (3);
planarizing the processing surface of the workpiece through chemical and mechanical actions by moving the workpiece and the processing pad relative to each other with the slurry interposed between the processing surface of the workpiece and the processing pad; and
cleaning the processing pad with a cleaning solution (L), in which
during the planarization process, the slurry circulates through a circulation flow channel (R) for the slurry, which includes a slurry supply flow channel (63) that supplies the slurry to the processing pad and a slurry recovery flow channel (652) that recovers the slurry after use, and
when the processing pad is cleaned with the cleaning solution, the cleaning solution is discharged through a waste liquid flow channel (653), which is separate from the circulation flow channel, allowing liquid waste to flow through the waste liquid flow channel.

### [Aspect 1-2]

The surface processing method according to Aspect 1-1, in which
Mohs hardness of the abrasive grains is 10 or more.

### [Aspect 1-3]

The surface processing method according to Aspect 1-2, in which
the abrasive grains in the slurry include manganese dioxide abrasive grains.

### [Aspect 1-4]

The surface processing method according to any one of Aspects 1-1 to 1-3, in which
a pH range of the slurry is between 7 or more and 9 or less.

### [Aspect 1-5]

The surface processing method according to any one of Aspects 1-1 to 1-4, in which
a grain size of the abrasive grains in the slurry flowing through the slurry supply flow channel is 20 µm or less.

### [Aspect 1-6]

The surface processing method according to any one of Aspects 1-1 to 1-5, in which
concentration of the abrasive grains in the slurry is 15% by weight or less.

### [Aspect 1-7]

The surface processing method according to any one of Aspects 1-1 to 1-6, in which
a flow rate of the slurry flowing through the slurry supply flow channel is 0.15 m/s or more.

### [Aspect 1-8]

The surface processing method according to any one of Aspects 1-1 to 1-7, further including:
measuring property of the slurry flowing through the slurry supply flow channel; and
controlling a processing condition for the planarization process based on a measurement result.

### [Aspect 1-9]

The surface processing method according to any one of Aspects 1-1 to 1-8, in which
the processing pad uses a polishing pad that can withstand the planarization process for more than 10 hours.

### [Aspect 1-10]

The surface processing method according to any one of Aspects 1-1 to 1-9, in which
the workpiece is made of a material containing SiC.

### [Aspect 2-1]

A surface processing method including:
supplying slurry (S) containing at least abrasive grains between a processing surface (W1) of a workpiece (W) and a processing pad (3); and
planarizing the processing surface of the workpiece through chemical and mechanical actions by moving the workpiece and the processing pad relative to each other with the slurry interposed between the processing surface of the workpiece and the processing pad, in which
the planarization process is performed with the slurry with a pH range of 7 or more and 9 or less circulating through a circulation flow channel (R) for the slurry, which includes a slurry supply flow channel (63) that supplies the slurry to the processing pad and a slurry recovery flow channel (652) that recovers the slurry after use.

### [Aspect 2-2]

The surface processing method according to Aspect 2-1, in which
Mohs hardness of the abrasive grains is 10 or more.

### [Aspect 2-3]

The surface processing method according to Aspect 2-2, in which
the abrasive grains in the slurry include manganese dioxide abrasive grains.

### [Aspect 2-4]

The surface processing method according to any one of Aspects 2-1 to 2-3, in which
during the planarization process, the slurry circulates through the circulation flow channel,
further including cleaning the processing pad with a cleaning solution (L), in which
when the processing pad is cleaned with the cleaning solution, the cleaning solution is discharged through a waste liquid flow channel (653), which is separate from the circulation flow channel, allowing liquid waste to flow through the waste liquid flow channel.

### [Aspect 2-5]

The surface processing method according to any one of Aspects 2-1 to 2-4, in which
a grain size of the abrasive grains in the slurry flowing through the slurry supply flow channel is 20 µm or less.

### [Aspect 2-6]

The surface processing method according to any one of Aspects 2-1 to 2-5, in which
concentration of the abrasive grains in the slurry is 15% by weight or less.

### [Aspect 2-7]

The surface processing method according to any one of Aspects 2-1 to 2-6, in which
a flow rate of the slurry flowing through the slurry supply flow channel is 0.15 m/s or more.

### [Aspect 2-8]

The surface processing method according to any one of Aspects 2-1 to 2-7, further including:
measuring property of the slurry flowing through the slurry supply flow channel; and
controlling a processing condition for the planarization process based on a measurement result.

### [Aspect 2-9]

The surface processing method according to any one of Aspects 2-1 to 2-8, in which
the processing pad uses a polishing pad that can withstand the planarization process for more than 10 hours.

### [Aspect 2-10]

The surface processing method according to any one of Aspects 2-1 to 2-9, in which
the workpiece is made of a material containing SiC.

### [Aspect 3-1]

A surface processing method including:
supplying slurry (S) containing at least abrasive grains between a processing surface (W1) of a workpiece (W) and a processing pad (3); and
planarizing the processing surface of the workpiece through chemical and mechanical actions by moving the workpiece and the processing pad relative to each other with the slurry interposed between the processing surface of the workpiece and the processing pad, in which
the planarization process is performed with the slurry circulating through a circulation flow channel (R) for the slurry, which includes a slurry supply flow channel (63) that supplies the slurry to the processing pad and a slurry recovery flow channel (652) that recovers the slurry after use, and
a flow rate of the slurry flowing through the slurry supply flow channel is 0.15 m/s or more.

### [Aspect 3-2]

The surface processing method according to Aspect 3-1, in which
Mohs hardness of the abrasive grains is 10 or more.

### [Aspect 3-3]

The surface processing method according to Aspect 3-2, in which
the abrasive grains in the slurry include manganese dioxide abrasive grains.

### [Aspect 3-4]

The surface processing method according to any one of Aspects 3-1 to 3-3, in which
a pH range of the slurry is between 7 or more and 9 or less.

### [Aspect 3-5]

The surface processing method according to any one of Aspects 3-1 to 3-4, in which
during the planarization process, the slurry circulates through the circulation flow channel,
further including cleaning the processing pad with a cleaning solution (L), in which
when the processing pad is cleaned with the cleaning solution, the cleaning solution is discharged through a waste liquid flow channel (653), which is separate from the circulation flow channel, allowing liquid waste to flow through the waste liquid flow channel.

### [Aspect 3-6]

The surface processing method according to any one of Aspects 3-1 to 3-5, in which
a grain size of the abrasive grains in the slurry flowing through the slurry supply flow channel is 20 µm or less.

### [Aspect 3-7]

The surface processing method according to any one of Aspects 3-1 to 3-6, in which
concentration of the abrasive grains in the slurry is 15% by weight or less.

### [Aspect 3-8]

The surface processing method according to any one of Aspects 3-1 to 3-7, further including:
measuring property of the slurry flowing through the slurry supply flow channel; and
controlling a processing condition for the planarization process based on a measurement result.

### [Aspect 3-9]

The surface processing method according to any one of Aspects 3-1 to 3-8, in which
the processing pad uses a polishing pad that can withstand the planarization process for more than 10 hours.

### [Aspect 3-10]

The surface processing method according to any one of Aspects 3-1 to 3-9, in which
the workpiece is made of a material containing SiC.

## Claims

1. A surface processing method comprising:
supplying slurry (S) containing at least abrasive grains between a processing surface (W1) of a workpiece (W) and a processing pad (3);
planarizing the processing surface of the workpiece through chemical and mechanical actions by moving the workpiece and the processing pad relative to each other with the slurry interposed between the processing surface of the workpiece and the processing pad; and
cleaning the processing pad with a cleaning solution (L), wherein
during the planarization process, the slurry circulates through a circulation flow channel (R) for the slurry, which includes a slurry supply flow channel (63) that supplies the slurry to the processing pad and a slurry recovery flow channel (652) that recovers the slurry after use, and
when the processing pad is cleaned with the cleaning solution, the cleaning solution is discharged through a waste liquid flow channel (653), which is separate from the circulation flow channel, allowing liquid waste to flow through the waste liquid flow channel.

2. The surface processing method according to claim 1, wherein
Mohs hardness of the abrasive grains is 10 or more.

3. The surface processing method according to claim 2, wherein
the abrasive grains in the slurry comprise manganese dioxide abrasive grains.

4. The surface processing method according to any one of claims 1 to 3, wherein
a pH range of the slurry is between 7 or more and 9 or less.

5. The surface processing method according to any one of claims 1 to 4, wherein
a grain size of the abrasive grains in the slurry flowing through the slurry supply flow channel is 20 µm or less.

6. The surface processing method according to any one of claims 1 to 5, wherein
concentration of the abrasive grains in the slurry is 15% by weight or less.

7. The surface processing method according to any one of claims 1 to 6, wherein
a flow rate of the slurry flowing through the slurry supply flow channel is 0.15 m/s or more.

8. The surface processing method according to any one of claims 1 to 7, further comprising:
measuring property of the slurry flowing through the slurry supply flow channel; and
controlling a processing condition for the planarization process based on a measurement result.

9. The surface processing method according to any one of claims 1 to 8, wherein
the processing pad uses a polishing pad that can withstand the planarization process for more than 10 hours.

10. The surface processing method according to any one of claims 1 to 9, wherein
the workpiece is made of a material containing SiC.
